# EUROPÄISCHE PATENTSCHRIFT

(11) **EP 1 123 188 B1**
(45) Veröffentlichungstag und Bekanntmachung des Hinweises auf die Patenterteilung: **29.10.2003**
(21) Anmeldenummer: 99955724.2
(22) Anmeldetag: 14.09.1999
(51) Int. Cl.: B29C 45/52

(54) **RÜCKSTROMSPERRE FÜR DIE PLASTIFIZIER- UND EINSPRITZEINHEIT IN SPRITZGIESSMASCHINEN**
NONRETURN VALVE FOR PLASTIFYING AND INJECTION UNIT IN INJECTION-MOULDING MACHINES
CLAPET DE NON-RETOUR POUR UNITE DE PLASTIFICATION ET INJECTION DANS DES MACHINES A MOULER PAR INJECTION

(30) Priorität: 21.10.1998 DE 19849472
(43) Veröffentlichungstag der Anmeldung: 16.08.2001
(73) Patentinhaber: Demag Ergotech GmbH, 90571 Schwaig (DE)
(72) Erfinder: SCHREINER, Helmut, D-90411 Nürnberg (DE); SCHIMMEL, Dieter, D-91154 Roth (DE); SEIDEL, Jörg, D-90559 Burgthann (DE)
(74) Vertreter: Meissner, Peter E., Dipl.-Ing.
(86) Internationale Anmeldenummer: DE9902971
(87) Internationale Veröffentlichungsnummer: WO00023248

(56) Entgegenhaltungen:
- DE-C- 3 717 735
- US-A- 5 167 971
- PATENT ABSTRACTS OF JAPAN vol. 011, no. 352 (M-643), 18. November 1987 (1987-11-18) -& JP 62 130818 A (MEIKI CO LTD), 13. Juni 1987 (1987-06-13)
- PATENT ABSTRACTS OF JAPAN vol. 1997, no. 01, 31. Januar 1997 (1997-01-31) & JP 08 224761 A (NISSEI PLASTICS IND CO), 3. September 1996 (1996-09-03)
- PATENT ABSTRACTS OF JAPAN vol. 011, no. 094 (M-574), 25. März 1987 (1987-03-25) & JP 61 246031 A (JAPAN STEEL WORKS LTD:THE;OTHERS: 01), 1. November 1986 (1986-11-01)

## Beschreibung

Die Erfindung betrifft eine Rückströmsperre für die Plastifizier- und Einspritzschnecke in Spritzgießmaschinen, insbesondere für die Verarbeitung von thermoplastischen Kunststoffen, die eine axial verschiebbare Sperrhülse aufweist, die einen zwischen Flügeln und einem Anschlagring vorhandenen verjüngten Bereich eines im Schneckenkopf fixierten Grundkörpers mit radialem Spiel umschließt.

Eine solche Rückströmsperre ist aus DE-A-3 711 775 bekannt.

Beim Spritzgießen von thermoplastischen Kunststoffen werden Schnecken eingesetzt, die in Plastifizierzylindern axial verschiebbar und in definierter Richtung drehbar sind. Durch die hierbei auftretende Reibung und ggf. durch zusätzlich eingesetzte Heizelemente wird das Kunststoffgranulat dabei plastifiziert. Zum Einspritzen der Kunststoffmasse in die Kavität eines Formwerkzeugs wird die Schnecke als Kolben eingesetzt und hierzu axial im Plastifizierzylinder bewegt. Zur Verhinderung, daß bei diesem Einspritzvorgang, also bei Vorlaufen der nicht drehenden Schnecke, zu plastifizierendes Material zurückfließt, werden Rückstromsperren eingesetzt. Diese Rückstromsperren besitzen eine Sperrhülse, die beim Einspritzen gegen eine Druckringfläche eines am Kopf der Schnecke angeordneten Grundkörpers gepresst wird.

Beim Dosieren, d.h. bei rücklaufender rotierender Schnecke wird der Sperring von der Druck- und Stirnfläche abgehoben und gegen die Anlageflächen von am Kopf des Grundkörpers angeordneten Flügeln gedrückt. Der Sperring dreht sich mit relativ langsamer Geschwindigkeit infolge der Reibung an der Wand des Plastifizierzylinders während der Drehung der Schnecke beim Dosieren mit. Hierbei kommt es zu einem Trockenlauf zwischen den Anlageflächen der Flügel und der Sperrhülse und somit zu erhöhtem Verschleiß.

Zur Minderung des Verschleißes sind verschiedene Maßnahmen vorgeschlagen worden. So ist aus der DE 37 11 775 A1 bekannt, die korrespondierenden Flächen der verschiebbaren Sperrhülse und der Flügel in einer Weise auszugestalten, daß die benachbarten Stirnflächen einen Winkel zwischen 5 und 30°, zweckmäßigerweise von 15° bilden. Mit dieser Maßnahme soll während des Dosiervorganges, also während die Schnecke rotiert, plastifiziertes Material zwischen die Flächen der Sperrhülse und die der Flügel eingezogen werden, so daß sich dort ein sich stets erneuender Materialfilm aufrechterhält, der ein Trockenlaufen verhindert.

Aus DE 297 01 495 U1 ist es bekannt, die Sperrhülse bzw. den Absperring während des Dosiervorganges formschlüssig zu greifen und somit mit der gleichen Drehzahl wie die Schnecke selber im Plastifizierzylinder rotieren zu lassen.

Das Abstract zur Schrift JP62 130 818 zeigt eine Plastifiziereinheit in Spritzgießmaschinen mit einem Plastifizierzylinder, in dem eine drehbare und axial verschiebbare Schnecke angeordnet ist, an der kopfseitig eine Rückstromsperre vorgesehen ist, die eine axial verschiebbare Sperrhülse aufweist, die einen zwischen Rillen und einem Anschlagring vorhandenen verjüngten Bereich eines im Schneckenkopf fixierten Grundkörpers mit radialem Spiet umfaßt.
An den der Sperrhülse zugewandten Flächen des Grundkörpers sind Auflageelemente vorgesehen, die aus verschleißarmem, keramischem Material aufgebaut sind.

Bei den bekannt gewordenen Plastifiziereinheiten in Spritzgießmaschinen weisen die eingesetzten Rückstromsperren einen hohen Verschleiß und/oder örtliche Schädigungen der Spritzgießmasse und der Berührungsfläche der Sperrhülse zu den Flügeln bzw. zum Plastifizierzylinder auf.

Der Erfindung lag die Aufgabe zugrunde, eine Plastifiziereinheit in Spritzgießmaschinen zu schaffen, die bei einem einfachen und konstruktiven Aufbau eine Rückstromsperre besitzt, die eine größtmögliche Funktionssicherheit bei definiert geringem Verschleiß und minimaler Schädigung des Kunststoffmaterials gewährleistet.

Die Erfindung löst diese Aufgabe durch eine Rückströmsperre gemäß Anspruch 1. Die nachfolgenden Ansprüche sind vorteilhafte Weiterbildungen der Erfindung.

Erfindungsgemäß sind an den Flügeln des Grundkörpers Auflageelemente vorgesehen, wobei mindestens die Auflageflächen aus einem verschleißarmen Werkstoff aufgebaut sind. Beim Einsatz von mindestens drei Auflageelementen stützt sich die Sperrhülse gleichmäßig auf diesen verschleißarmen Auflageflächen während des Dosiervorganges ab.
Durch die konstante, wie drei Gleitlager wirkende Auflageflächen, ist die Reibkraft zur Berührungsfläche der Sperrhülse hin berechenbar und während des Dosiervorganges konstant.
Weiterhin sind Maßnahmen vorgesehen, während des Dosiervorganges, also bei rotierender Schnecke und relativer Bewegung zwischen den Flügeln des Grundkörpers und der Sperrhülse das hier befindliche Kunststoffmaterial so wenig wie möglich zu beeinflussen, insbesondere eine Schädigung des Rohstoffes zu verhindern.
Die Auflageelemente sind als Stifte ausgebildet und unter einem rechten Winkel zur Abstützfläche der Sperrhülse angeordnet. Wetterhin sind die Stifte in Richtung der Sperrhülse konisch erweitert, so daß sie selbstsichemd in die Flügel eingepreßt werden können.
Um ein gleichmäßiges, verschleißarmes Anliegen der Abstützfläche der Sperrhülse an den Stiften zu ermöglichen, sind, insbesondere bei dem Einsatz von mehr als drei Flügeln, am Fußende der Stifte Kraftelemente angeordnet, die die Stifte federnd gegen die Sperrhülse drücken.
In zweckmäßiger Weise überragen die Kopfenden der Auflageelemente die Flächen der Flügel. In der anderen Ausgestaltung ist die der Sperrhülse zugewandte Fläche der Flügel bogenförmig ausgebildet. In beiden Fällen wird eine Gleitbewegung zwischen der Flügelfläche und der Sperrhülsefläche vermieden, so daß es nicht zu Schlieren oder zu Verfärbungen am Formteil kommen kann.
In einer vorteilhaften Ausgestaltung sind die Stifte aus Hartmetall oder weisen, zumindestens im Bereich der Auflagefläche, eine Schicht auf, die Karbide enthält.

Die Sperrhülse kann dabei so ausgestaltet sein, daß noch ein geringer Verschleiß in Kauf genommen wird, zumal es sich bei der Sperrhülse um ein relativ einfaches geometrisches Teil handelt, das leicht austauschbar ist. In einer weiteren Ausgestaltung wird die Anlagefläche zu den Auflageelementen ebenfalls aus verschleißarmen Werkstoff aufgebaut, so daß also keinerlei Verschleiß zwischen dem Grundkörper und der Sperrhülse auftritt. In Sonderfällen kann die gesamte Sperrhülse aus einem verschleißmindernden Material hergestellt sein.

Ein Beispiel der Erfindung ist in der beigefügten Zeichnung dargestellt. Dabei zeigen
- Figur 1: ein Detail des Plastifizierzylinders mit dem Kopf der Schnecke,
- Figur 2: eine Schnittansicht in Richtung AA nach Fig. 1,
- Figur 3: einen Grundkörper mit Sperrhülse,
- Figur 4: den Schnitt eines Flügels, Ansicht BB.

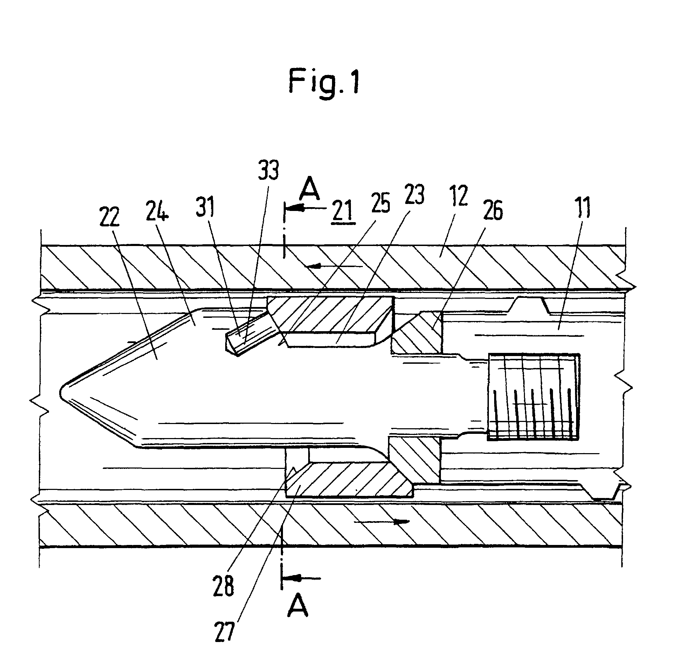

Die Figur 1 zeigt einen Teil eines Plastifizierzylinders 12, in dem eine Schnecke 11 angeordnet ist, an deren Kopf eine Rückstromsperre 21 lösbar befestigt ist.

Die Rückstromsperre 21 weist einen Grundkörper 22 auf, der einen verjüngten Bereich 23 besitzt, der der Schnecke 11 zugewandt einen Anschlagring 26 aufweist und zur Spitze hin mindestens drei Flügel 24 besitzt.

Der verjüngte Bereich 22 wird umhüllt von einer Sperrhülse 27, die in axialer Richtung verschiebbar sich einenends an der der Sperrhülse zugewandten Fläche 25 der Flügel 24 und nach Verschiebung anderenends an dem Anschlagring 26 abstützt.

Die den Flügeln zugewandte Abstützfläche 28 der Sperrhülse 27 liegt auf in den Flügeln 24 vorgesehenen Auflageelementen 31. Im vorliegenden Beispiel ist das Auflageelement 31 als Stift 33 ausgestaltet, der in Richtung Sperrhülse 27 eine konisch sich erweiternde Form besitzt.

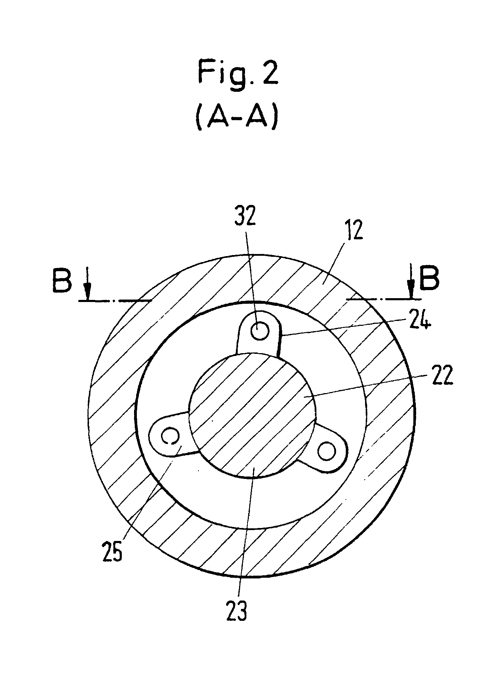

In der Figur 2 ist die Ansicht AA dargestellt mit einem Schnitt durch den Plastifizierzylinder 12 mit einem Blick auf die Auflageelemente 31 des Grundkörpers 22 im verjüngten Bereich 23. Von den Flügeln 24 ist die der Sperrhülse zugewandte Fläche 25 zu sehen, in der die Fläche 32 des Auflageelementes 31 sichtbar Ist.

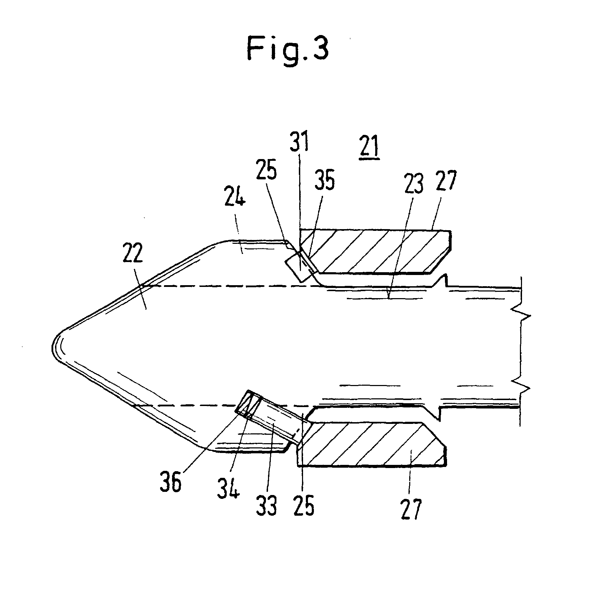

Die Figur 3 zeigt einen Teil des Grundkörpers 22, bei dem im verjüngten Bereich 23 die Sperrhülse 27 angeordnet ist. Im oberen Teil der Figur ist in einem Flügel 24 ein Auflageelement 31 dargestellt, das eine zylindrische Form besitzt und dessen der Sperrhülse zugewandte Fläche eine Verschleißschicht 35 aufweist.

Im unteren Teil des Bildes ist ein Auflageelement 31 als Stift 33 ausgestaltet, an dessen Fußende 34 sich ein Kraftelement 36 befindet.

Beide in dieser Figur dargestellten Auflageelemente 31 ragen über die Fläche 25 der Flügel 24 hinaus.

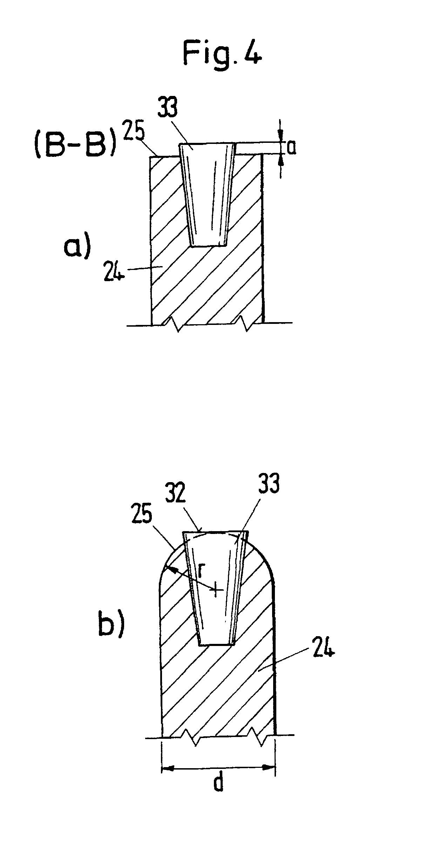

In der Figur 4 ist ein Detail eines Flügels 24 in der Ansicht BB dargestellt. In den Figuren 4a und 4b ist jeweils das Auflageelement 31 als konischer Stift 33 ausgestaltet, der kopfseitig in den Flügel 24 eingepreßt ist. Der hier eingesetzte konische Hartmetallbolzen ist somit vorgespannt in der Aufnahmebohrung fixiert und weitgehenst gegen Auspröckeln der Bolzenrandzonen durch die Einbettung in der Aufnahmebohrung abgestützt.
Das Kopfende des hier eingesetzten Stiftes 33 ragt um das Maß a über die Fläche 25 des Flügels 24 hinaus.
Im rechten Teil ist in der Figur 4b die Fläche 25 des Flügels 24 abgerundet und zwar mit einem Radius r. Der Scheitelpunkt der Fläche 25 tangiert die Fläche 32 des Stiftes 33.

### Positionsliste

### Plastifizieren

- 11: Schnecke
- 12: Plastifizierzylinder

### Sperren

- 21: Rückstromsperre
- 22: Grundkörper
- 23: Verjüngter Bereich (22)
- 24: Flügel (22)
- 25: Der Sperrhülse (27) zugewandte Fläche (24)
- 26: Anschlagring
- 27: Sperrhülse
- 28: Den Flügeln (24) zugewandte Abstützfläche (27)

### Aufliegen

- 31: Auflageelement
- 32: Fläche (31)
- 33: Stift
- 34: Fußende Stift (33)
- 35: Verschleißschicht
- 36: Kraftelement

- h: Maß des Überragens (32 zu 25)
- b: Dicke des Flügels
- d: Durchmesser (31)
- r: Radius (24)

## Patentansprüche

1. Rückströmsperre für die Plastifizier- und Einspritzschnecke in Spritzgießmaschinen, insbesondere für die Verarbeitung von thermoplastischen Kunststoffen, die eine axial verschiebbare Sperrhülse aufweist, die einen zwischen Flügeln und einem Anschlagring vorhandenen verjüngten Bereich eines im Schneckenkopf fixierten Grundkörpers mit radialem Spiel umschließt,
**dadurch gekennzeichnet,**
- **daß** der Grundkörper (22) mindestens drei Flügel (24) besitzt,
- **daß** an den der Sperrhülse (27) zugewandten Flächen (25) der Flügel (24) Auflageelemente (31) vorgesehen sind,
- **daß** die Auflageelemente (31) als Stifte (33) ausgebildet sind,
- **daß** die Stifte (33) unter einem rechten Winkel zur Abstützfläche (28) der Sperrhülse (27) angeordnet sind,
- **daß** mindestens die Auflageflächen (32) der Auflageelemente (31) aus einem verschleißarmen Werkstoff aufgebaut sind,
- **daß** die Stifte (33) in Richtung Sperrhülse (27) sich konisch erweitern, und
- **daß** am Fußende (34) der Stifte (33) Kraftelemente (36) angeordnet sind, die ein gleichmäßiges Anpressen der Flächen (32) der Stifte (33) gegen die Abstützfläche (28) der Sperrhülse (27) sichern.

2. Rückströmsperre nach Anspruch 1,
**dadurch gekennzeichnet,**
**daß** das Kopfende der Auflageelemente (31) die Flächen (25) der Flügel (24) überragt.

3. Rückströmsperre nach Anspruch 1,
**dadurch gekennzeichnet,**
**daß** die der Sperrhülse (27) zugewandte Fläche (25) der Flügel (24) bogenförmig ausgestaltet ist und
**daß** im Scheitel der höchsten Erhebung der Fläche (25) das Auflageelement (31) angeordnet ist.

4. Rückströmsperre nach Anspruch 3,
**dadurch gekennzeichnet,**
**daß** die bogenförmige Ausgestaltung der Fläche (25) eine einfache kreisförmige Abrundung ist mit einem Radius (r) von r > ½ * b mit b = Dicke des Flügels (24) in seinem Kopfbereich.

5. Rückströmsperre nach Anspruch 1,
**dadurch gekennzeichnet,**
**daß** zumindestens der mit den Auflageflächen (32) der Auflageelemente (31) korrespondierende Bereich der Sperrhülse (27) aus einem verschleißarmen Werkstoff aufgebaut ist.

6. Rückströmsperre nach Anspruch 1,
**dadurch gekennzeichnet,**
**daß** die Stifte aus Hartmetall oder Keramik sind.

7. Rückströmsperre nach Anspruch 1 oder 5,
**dadurch gekennzeichnet,**
**daß** die Flächen (32) der Auflageelemente (31) eine Karbide oder Boride aufweisende Verschleißschicht (35) besitzen.

## Claims

1. A non-return valve for the plasticising and injection screw in injection-moulding machines, in particular for processing thermoplastic materials, which has an axially displaceable blocking sleeve which encloses with radial clearance a tapered region of a base body fixed in the head of the screw present between the wings and a stop ring,
**characterised in that**
- the base body (22) has at least three wings (24),
- contact elements (31) are provided on the surfaces (25) of the wings (24) which face the blocking sleeve (27),
- the contact elements (31) are in the form of pins (33),
- the pins (33) are arranged at a right-angle to the supporting surface (28) of the blocking sleeve (27),
- at least the contact surfaces (32) of the contact elements (31) are constructed from a low-wear material,
- the pins (33) widen conically in the direction of the blocking sleeve (27), and
- force elements (36) are arranged at the bottom end (34) of the pins (33), which elements ensure uniform pressing of the surfaces (32) of the pins (33) against the supporting surface (28) of the blocking sleeve (27).

2. A non-return valve according to Claim 1, **characterised in that** the top end of the contact elements (31) projects over the surfaces (25) of the wings (24).

3. A non-return valve according to Claim 1, **characterised in that** the surface (25) of the wings (24) which faces the blocking sleeve (27) is arcuate and that the contact element (31) is located in the apex of the highest elevation of the surface (25).

4. A non-return valve according to Claim 3, **characterised in that** the arcuate configuration of the surface (25) is a simple circular rounding with a radius (r) of r > ½ * b, where b is the thickness of the wing (24) in its top region.

5. A non-return valve according to Claim 1, **characterised in that** at least the region of the blocking sleeve (27) corresponding to the contact surfaces (32) of the contact elements (31) is constructed from a low-wear material.

6. A non-return valve according to Claim 1, **characterised in that** the pins are made of hard metal or ceramic.

7. A non-return valve according to Claim 1 or 5, **characterised in that** the surfaces (32) of the contact elements (31) have a wearing layer (35) containing carbides or borides.

## Revendications

1. Clapet anti-retour pour la vis d'injection et de plastification dans des machines de coulée par injection, en particulier pour le traitement de matières synthétiques thermoplastiques, qui présente un manchon d'arrêt axialement déplaçable, qui entoure une zone amincie, présente entre des ailettes et une bague de butée, d'un corps de base fixé dans la tête de vis avec un jeu radial,
**caractérisé en ce que** :
- le corps de base (22) possède au moins trois ailettes (24),
- sur les surfaces (25), en regard du manchon d'arrêt (27), des ailettes (24), sont prévus des éléments d'appui (31),
- les éléments d'appui (31) sont réalisés comme broches (33),
- les broches (33) sont agencées sous un angle droit par rapport à la surface d'appui (28) du manchon d'arrêt (27),
- au moins les surfaces d'appui (32) des éléments d'appui (31) sont réalisées en une matière à faible usure,
- les broches (33) s'élargissent de façon conique en direction du manchon d'arrêt (27), et
- à l'extrémité de pied (34) des broches (33), sont agencés des éléments de force (36) qui garantissent un pressage uniforme des surfaces (32) des broches (33) contre la surface d'appui (28) du manchon d'arrêt (27).

2. Clapet anti-retour selon la revendication 1,
**caractérisé en ce que** l'extrémité de tête des éléments d'appui (31) fait saillie des surfaces (25) des ailettes (24).

3. Clapet anti-retour selon la revendication 1,
**caractérisé en ce que** la surface (25), en regard du manchon d'arrêt (27), des ailettes (24) est réalisée de façon cintrée, et **en ce que** l'élément d'appui (31) est agencé au sommet de la surélévation la plus importante de la surface (25).

4. Clapet anti-retour selon la revendication 3,
**caractérisé en ce que** la réalisation cintrée de la surface (25) est un arrondi circulaire simple avec un rayon (r) de r > ½ * b, avec b = épaisseur de l'ailette (24) dans sa zone de tête.

5. Clapet anti-retour selon la revendication 1,
**caractérisé en ce qu'**au moins la zone, correspondant aux surfaces d'appui (32) des éléments d'appui (31), du manchon d'arrêt (27) est réalisée en une matière à faible usure.

6. Clapet anti-retour selon la revendication 1,
**caractérisé en ce que** les broches sont en métal dur ou en céramique.

7. Clapet anti-retour selon la revendication 1 ou 5,
**caractérisé en ce que** les surfaces (32) des éléments d'appui (31) possèdent une couche d'usure (35) présentant des carbures ou borures.
